# EUROPÄISCHE PATENTANMELDUNG

(11) **EP 1 083 447 A1**
(43) Veröffentlichungstag der Anmeldung: **14.03.2001**
(21) Anmeldenummer: 00115726.2
(22) Anmeldetag: 21.07.2000
(51) Int. Cl.: G02B 6/38, G02B 6/44, G02B 6/36

(54) **Frontplatte für ein Steckermodul**

(30) Priorität: 09.09.1999 DE 19943191
(71) Anmelder: KRONE GmbH, 14167 Berlin (DE)
(72) Erfinder: Adomeit, Jörg, 12247 Berlin (DE); Gotzmann, Andreas, 12357 Berlin (DE)

(57) **Zusammenfassung**

Die Erfindung bezieht sich auf eine Frontplatte für ein Glasfaser-Steckermodul der Telekommunikations- und Datentechnik, mit einem Längsschlitz zum Einsetzen von Kupplungen für Glasfaserstecker. Um den Raumbedarf der angeschlossenen Glasfaserkabel zu verringern und eine größere Sicherheit gegen Augenschäden der Bedienungspersonen zu schaffen, sieht die Erfindung vor, daß die Achsen (10) der Kupplungen (6) in der Ebene quer zum Längsschlitz (5) unter einem Winkel (α) zur Vorderseite (11) der Frontplatte (4) ausgerichtet sind

## Beschreibung

Die Erfindung bezieht sich auf eine Frontplatte für ein Steckermodul der Telekommunikations- und Datentechnik, mit einem Längsschlitz zum Einsetzen von Kupplungen für Glasfaserstecker.

Eine Frontplatte der gattungsgemäßen Art ist bei Glasfaser-Steckermodulen für 19"/ETSI-Baugruppenträger (European Telecommunication Standardisation Institute) bekannt, die in Glasfaser-Hauptverteiler eingeschoben werden. Dabei befinden sich z.B. 12 Kupplungen dicht an dicht gepackt im Längsschlitz der Frontplatte. Auf der Rückseite der Frontplatte sind in die Kupplungen Pigtails eingesteckt, deren Glasfaser-Vorratslängen in einer Kassette untergebracht sind. Auf der Vorderseite sind mit Glasfaserkabeln verbundene Glasfaser-Steckverbinder oder Blindstecker eingesteckt. Da die Kupplungen mit senkrecht zur Vorderseite der Frontplatte gerichteter Achse in die Frontplatte eingesetzt sind und die Glasfaserkabel wegen der Gefahr der Knickung einen großen Biegeradius erfordern, ist für die vor der Frontplatte befindlichen Glasfaserkabel ein großer Raumbedarf erforderlich. Auch müssen die Glasfaser-Steckverbinder senkrecht zur Vorderseite der Frontplatte gesteckt werden, was bei der Bedienungsperson wegen der Ergonomie der menschlichen Hand zu Handhabungsschwierigkeiten führen kann. Ferner besteht die Gefahr, daß bei offener Kupplung und noch in Betrieb befindlicher, auf der Rückseite angeschlossenen Glasfaserkabel auf der Vorderseite der Kupplungen ein für das Auge unsichtbares IR-Lichtsignal austritt. Die Folge sind mögliche Augenschäden der Bedienungsperson.

Der Erfindung liegt von daher die Aufgabe zugrunde, die Frontplatte der gattungsgemäßen Art im Hinblick auf die Nachteile vorbekannter Frontplatten zu verbessern.

Zur Lösung dieser Aufgabe sieht die Erfindung vor, daß die Achsen der Kupplungen in der Ebene quer zum Längsschlitz unter einem Winkel zur Vorderseite der Frontplatte ausgerichtet sind. Dadurch ist für die auf der Vorderseite angeschlossenen Glasfaserkabel nur ein kleiner Raumbedarf erforderlich, selbst wenn die Glasfaserkabel einen großen Biegeradius erfordern, da die Glasfaserkabel aufgrund des Zuführwinkels seitlich zugeführt werden. Auch können die Glasfaser-Steckverbinder seitlich zur Vorderseite in die Frontplatte gesteckt werden, was wegen der Ergonomie der menschlichen Hand bei der Bedienungsperson zu keinen Handhabungsschwierigkeiten führt. Ferner besteht keine Gefahr, wenn bei offener Kupplung und noch in Betrieb befindlichen, auf der Rückseite angeschlossenen Glasfaserkabeln ein für das Auge unsichtbares IR-Lichtsignal austritt, daß die im wesentlichen senkrecht vor der Frontplatte stehende Bedienungsperson in die seitlich gerichtete, offene Kupplung einblickt, so daß die Gefahr von Augenschäden wesentlich verringert ist.

Die Erfindung ermöglicht eine einfache Bildung der für die Schrägstellung der Kupplungen erforderlichen winkligen Ausrichtung der Längsseiten des Längsschlitzes für die Aufnahme der Kupplungen.

Weitere vorteilhafte Ausgestaltungen der Erfindung ergeben sich aus den Merkmalen der Unteransprüche.

Die Erfindung ist nachfolgend anhand eines in den Zeichnungen dargestellten Ausführungsbeipieles einer Frontplatte für ein Glasfaser-Steckermodul näher erläutert. Es zeigen:
- Fig. 1: die perspektivische Ansicht auf die Frontplatte und das Glasfaser-Steckermodul,
- Fig. 2: die Draufsicht und
- Fig. 3: einen Schnitt durch die Frontplatte in vergrößerter Darstellung.

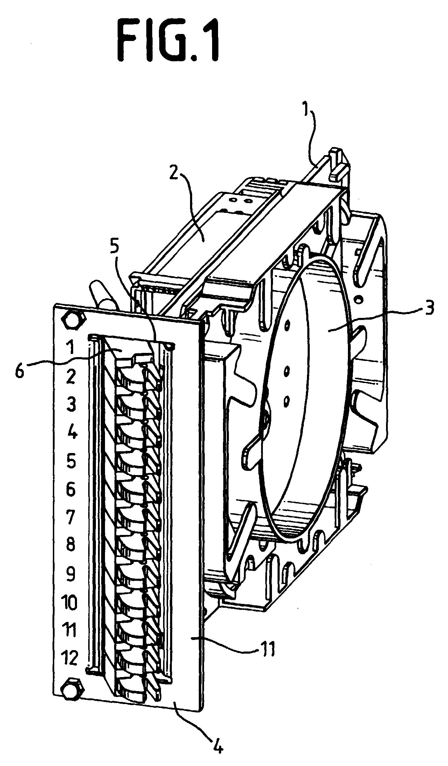

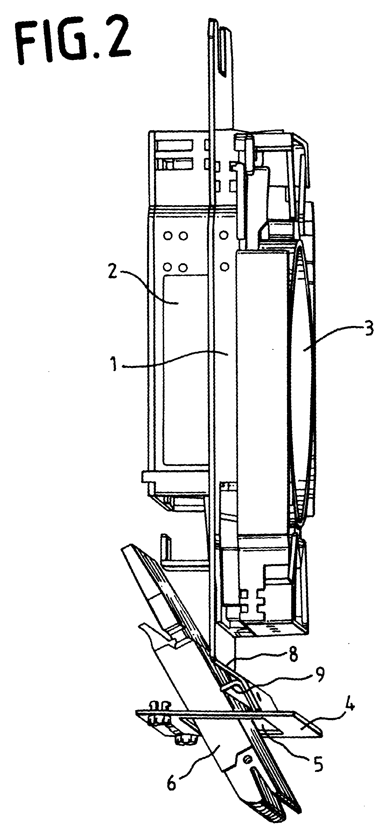

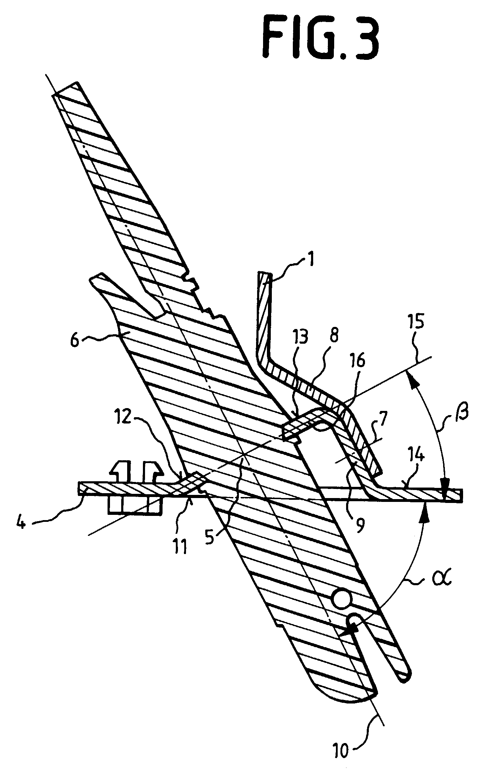

Das in den Figuren 1 und 2 dargestellte Glasfaser-Steckermodul für 19"/ETSI-Baugruppenträger der Telekommunikations- und Datentechnik, die in Glasfaser-Hauptverteiler eingeschoben werden, umfaßt eine in der Einschublage sich vertikal erstreckende Basisplatte 1 aus Metall, zu deren beiden Seiten sich Aufnahmegehäuse 2,3 aus Kunststoff befinden, die der Aufnahme der nicht näher dargestellten Glasfaserkabel-Vorratslängen und deren Spleiße dienen und die im Inneren des Glasfaser-Hauptverteilers angeordnet werden, sowie auf der Vorderseite eine Frontplatte 4 mit einem sich in Einbaulage vertikal erstreckenden Längsschlitz 5 für eine Mehrzahl von Kupplungen 6 für Glasfaserstecker. Im dargestellten Ausführungsbeispiel befinden sich in der Frontplatte 4 zwölf Kupplungen 6. Zur Verbindung der Frontplatte 4 mit der Basisplatte 1 ist die Basisplatte 1 am zur Frontplatte 4 gerichteten Randbereich 8 doppelt abgewinkelt, wie es in Fig.2 und 3 dargestellt ist, und über nicht näher dargestellte Verschraubungen 7 mit einem L-förmigen Träger 9 verschraubt, der aus der Frontplatte 4 in nachstehend beschriebener Weise herausgebogen ist.

Wie es insbesondere Fig. 3 zeigt, sind die Achsen 10 der Kupplungen 6 in der Ebene quer zum Längsschlitz 5, d.h. in der Zeichenebene der Figur 3, unter einem Winkel α zur Vorderseite 11 der Frontplatte 5 ausgerichtet. Hierzu sind die Längsseiten 12,13 des Längsschlitzes 5 der Frontplatte 4 zu deren Rückseite 14 hin derart abgewinkelt, daß die von den Längsseiten 13,14 des Längsschlitzes 5 gebildete Ebene 15 unter einem Winkel β gegen die Oberfläche der Vorderseite 11 der Frontplatte 4 geneigt ist. Hierzu ist die eine Längsseite 12 des Längsschlitzes 5 der Frontplatte 4 zu deren Rückseite 14 unter dem Winkel β gegen die Vorderseite 11 der Frontplatte 4 geneigt. Die andere Längsseite 13 ist durch den freien Schenkel 16 des L-förmig abgewinkelten Trägers 9 gebildet und in der Ebene 15 der ersten Längsseite 12 angeordnet.

Die beiden Längsseiten 12,13 des Längsschlitzes 5 werden dadurch hergestellt, daß die vor der Bearbeitung ebene Frontplatte 4 eingeschlitzt und die Längsseiten 12,13 durch an deren oberen und unteren Enden gebildete Querschlitze freigeschnitten werden.
Anschließend wird die Längsseite 12 unter dem Winkel β in die Ebene 15 abgebogen. Der L-förmige Träger 9 wird durch Biegung derart geformt, daß der freie Schenkel 16 als Längsseite 13 des Längsschlitzes 5 in der Ebene 15 liegt, wie es in Fig. 3 dargestellt ist. Im Ausführungsbeispiel nach Fig. 3 betragen der Winkel α= 55° bis 65°, vorzugsweise 60°, und der Winkel β= 25° bis 35°, vorzugsweise 30°. Wie es insbesondere Fig. 3 zeigt, sind dadurch die Achsen 10 der Kupplungen 6 in der Ebene quer zum Längsschlitz 5, d.h. in der Zeichenebene der Fig. 3, unter dem Winkel α zur Vorderseite 11 der Frontplatte 5 ausgerichtet.

### BEZUGSZEICHENLISTE

- 1: Basisplatte
- 2: Aufnahmegehäuse
- 3: Aufnahmegehäuse
- 4: Frontplatte
- 5: Längsschlitz
- 6: Kupplung
- 7: Verschraubung
- 8: Randbereich
- 9: Träger (L-förmig)
- 10: Achse
- 11: Vorderseite
- 12: Längsseite
- 13: Längsseite
- 14: Rückseite
- 15: Ebene
- 16: Schenkel

## Patentansprüche

1. Frontplatte für ein Glasfaser-Steckermodul der Telekommunikations- und Datentechnik, mit einem Längsschlitz zum Einsetzen von Kupplungen für Glasfaserstecker,
**dadurch gekennzeichnet**,
daß die Achsen (10) der Kupplungen (6) in der Ebene quer zum Längsschlitz (5) unter einem Winkel (α) zur Vorderseite (11) der Frontplatte (4) ausgerichtet sind.

2. Frontplatte nach Anspruch 1, dadurch gekennzeichnet, daß die Längsseiten (12,13) des Längsschlitzes (5) der Frontplatte (4) zu deren Rückseite (14) hin derart abgewinkelt sind, daß die von den Längsseiten (12,13) des Längsschlitzes (5) gebildete Ebene (14) unter einem Winkel (β) gegen die Vorderseite (11) der Frontplatte (4) geneigt ist.

3. Frontplatte nach Anspruch 2, dadurch gekennzeichnet, daß die eine Längsseite (12) des Längsschlitzes (5) der Frontplatte (4) zu deren Rückseite (14) unter dem Winkel (β) gegen die Vorderseite (11) der Frontplatte (5) geneigt ist und die andere Längsseite (13) durch den freien Schenkel (16) eines L-förmig abgewinkelten Trägers (9) gebildet ist, der in der Ebene (15) der ersten Längsseite (12) angeordnet ist.

4. Frontplatte nach Anspruch 3, dadurch gekennzeichnet; daß der L-förmig abgewinkelte Träger (9) mit der Rückseite (14) der Frontplatte (4) fest verbunden ist.

5. Frontplatte nach Anspruch 2, 3 oder 4, dadurch gekennzeichnet, daß der Winkel (α) zwischen der Achse (10) der Kupplungen (6) und der Vorder- bzw. Rückseite (11, 14) der Frontplatte (4) etwa 55° bis 65°, vorzugsweise 60°, und der Winkel (β) zwischen der Ebene (15) der beiden Längsseiten (1,3) des Längsschlitzes (5) und der Vorder- bzw. Rückseite (11, 14) der Frontplatte (4) etwa 25° bis 35°, vorzugsweise 30°, betragen.
